# EUROPEAN PATENT SPECIFICATION

(11) **EP 4 567 166 B1**
(45) Date of publication and mention of the grant of the patent: **10.12.2025**
(21) Application number: 24216803.7
(22) Date of filing: 02.12.2024
(51) Int. Cl.: D01F 1/02, D01F 1/10, D01F 6/60, D01F 6/90

(54) **BIO-NYLON FIBER CONTAINING PLANT ACTIVE COMPONENTS AND PREPARATION METHOD THEREOF**
BIOLOGISCH-NYLON-FASER MIT PFLANZLICHEN WIRKSTOFFEN UND HERSTELLUNGSVERFAHREN DAFÜR
FIBRE DE BIO- NYLON CONTENANT DES COMPOSANTS ACTIFS VÉGÉTAUX ET SON PROCÉDÉ DE PRÉPARATION

(30) Priority: 04.12.2023 CN 202311639241
(43) Date of publication of application: 11.06.2025
(73) Proprietor: BYHERB FUTURE HEALTH TECHNOLOGY (QINGDAO) CO., LTD., Qingdao, Shandong 266071 (CN); Sinotech Academy of Textile (Qingdao) Co., Ltd., Qingdao, Shandong 266042 (CN); Byherb Fiber Inc., 20120 Centreville, VA (US); Byherb Bigbio Technology (Qingdao) Co., Ltd., Qingdao, Shandong 266071 (CN)
(72) Inventor: HUANG, Xiaohua, 266071 Shandong (CN); HUANG, Yuanlong, 266071 Shandong (CN); CHI, Shan, 266071 Shandong (CN); LIU, Cui, 266071 Shandong (CN); LIU, Yanming, 266071 Shandong (CN)
(74) Representative: Lohr, Jöstingmeier & Partner Patent- und Rechtsanwälte mbB

(56) References cited:
- CN-A- 107 974 728
- CN-A- 108 998 852

## Description

### TECHNICAL FIELD

The present disclosure relates to the field of bio-nylon fibers, and more specifically, relates to a bio-nylon fiber containing plant active components and preparation method thereof.

### BACKGROUND

Nylon fiber, English name Polyamide, scientific name polyamide, also known as Nylon, is the first synthetic fiber to be introduced globally. The most notable advantages of nylon fiber include its superior wear resistance compared to other fibers and its excellent elasticity. The elastic recovery rate of nylon fiber is even comparable to that of wool. Incorporating some nylon fiber into blended fabrics may significantly enhance the fabric's wear resistance. When nylon fibers are stretched to 103-106%, their elastic recovery rate may reach 100%. Moreover, nylon fibers may withstand thousands of flexes without breaking. Among the commercially available synthetic fibers in the prior art, the density of nylon fiber is second only to polypropylene fiber (PP). Therefore, nylon fibers may be processed into fine, soft, and smooth threads, which may be woven into aesthetically pleasing and durable fiber products. Like polyester fibers, nylon fibers are also corrosion-resistant, insect-resistant, and mildew-resistant. Nylon filaments may be used to make socks, underwear, shirts, sportswear, ski jackets, raincoats, etc.; Nylon short fibers may be blended with cotton, wool, and viscose fibers to produce fabrics with excellent wear resistance and strength. Additionally, nylon fibers may be used for making hook-and-loop fasteners, carpets, decorative fabrics, etc. Industrially, nylon fibers are primarily used in the manufacture of cord fabrics, conveyor belts, fishing nets, ropes, and more.

With the advancement of science and technology and the improvement of living standards, the functionality of nylon fibers may gradually fail to meet practical application requirements, leading to an increasing focus on the functional improvement of nylon fibers. In recent years, a plurality of functional nylon fibers with diverse properties has been developed both domestically and internationally, continuously innovating and offering broad application prospects. The prior art has already developed various functional nylon fibers with different characteristics, such as acid-resistant nylon fibers, antioxidant nylon fibers, antistatic elastic nylon fibers, antibacterial nylon fibers, skincare nylon fibers, radiation-resistant nylon fibers, etc. Therefore, it is significant to conduct research on the functionality of nylon fibers and to expand their application fields

Bio-nylon fibers including plant active components are disclosed for example in CN-A-108 998 852 and CN-A-107 974 728.

### SUMMARY

One aspect of the present disclosure provides a method for preparing a bio-nylon fiber including plant active components. The method includes extracting a first component, extracting a second component, preparing a first active component, preparing a second active component, preparing a functional masterbatch, and spinning. Extracting the first component includes: drying a whole herb of Speranskia tuberculata, pulverizing, performing an ultrasonic extraction twice using an ethanol aqueous solution to obtain a first extraction solution of the first component and a second extraction solution of the first component respectively, combining the first extraction solution of the first component and the second extraction solution of the first component, and concentrating to obtain a first component solution. Extracting the second component includes: drying Artemisia argyi, Lygodium japonicum and Carthamus tinctorius, mixing and pulverizing, performing an ultrasonic extraction twice using an ethanol aqueous solution to obtain a first extraction solution of the second component and a second extraction solution of the second component respectively, combining the first extraction solution of the second component and the second extraction solution of the second component, and concentrating to obtain a second component solution. Preparing the first active component includes first processing, second processing and loading. Where the first processing includes: mixing nano-mesoporous silica and perlite to obtain a primary powder, placing the primary powder into toluene and ultrasonically dispersing evenly; adding N-(β-aminoethyl)-γ-aminopropyltrimethoxysilane and γ-aminopropyltrimethoxysilane while stirring, and stirring for 30-40 min; increasing the temperature to 80-90°C while stirring, stirring the mixture for 10-12 hours at this temperature, and separating the mixture to obtain a solid material; and washing the solid material with anhydrous ethanol, and drying the solid material to obtain a first processed material. The second processing includes: placing the first processed material into 13-15 times the volume of a second processing solution to obtain a mixture, stirring the mixture for 10-12 hours, and separating the mixture to obtain a solid material; and washing the solid material with deionized water, drying the solid material to obtain a second processed material, where the second processing solution is a deionized aqueous solution of sodium mercaptoacetate. The loading includes: adding the first component solution and sodium dodecylbenzenesulfonate into an ethanol solution, and stirring evenly; adding the second processed material, and dispersing evenly to obtain a mixture; vacuuming until a vacuum degree reaches 0.09-0.095 MPa, maintaining at the vacuum degree of 0.09-0.095 MPa for 30-50 min; restoring to a normal pressure, and raising a temperature to 35-40°C; and stirring the mixture at the temperature of 35-40 °C constantly, filtering the mixture to obtain a solid material, and vacuum drying the solid material to obtain the first active component. Preparing the second active component includes: adding the second component solution, sodium carboxymethyl cellulose, and maltodextrin to deionized water, and ultrasonically emulsifying to obtain a second component emulsion for later use; adding Arabic gum and guar gum to deionized water, heating to 50-60 °C while stirring evenly, to obtain a coating solution; adding the second component emulsion to the coating solution to obtain a mixture, ultrasonically dispersing evenly, and cooling to 4-6 °C; and keeping the mixture at this temperature for 2-4 hours, filtering the mixture to obtain a solid material, and vacuum drying the solid material to obtain the second active component. Preparing the functional masterbatch includes using the first active component to prepare a first functional masterbatch and using the second active component to prepare a second functional masterbatch. The spinning includes: mixing the first functional masterbatch, the second functional masterbatch and nylon raw material, and spinning to obtain the bio-nylon fiber including the plant active component.

Another aspect of the present disclosure provides a bio-nylon fiber including nylon 66 and a plurality of plant active components, wherein the plurality of plant active components are extracted from Speranskia tuberculata, Artemisia argyi, Lygodium japonicum and Carthamus tinctorius.

### DETAILED DESCRIPTION

To have a clearer understanding of the technical features, objectives, and effects of the present disclosure, the following specific embodiments of the present disclosure are now described.

To enhance the performance and application range of nylon fibers, the inventors develop bio-nylon (e.g., big-bio-nylon) fiber containing plant active components. This functional modification may be achieved by incorporating plant active components that can synergistically realize the functions of dispelling wind, relieving pain, and anti-inflammation into the nylon fibers. This modification may enable the effective and sustained release of the plant active components on the bio-nylon (e.g., big-bio-nylon) fiber. Additionally, the functionally modified bio-nylon (e.g., big-bio-nylon) fibers may be used to produce bandages, joint supports, shoulder supports, waist supports, and even vests and other downstream innerwear products. The plant active components released by the bio-nylon (e.g., big-bio-nylon) fibers may be absorbed through the skin, effectively improving and alleviating corresponding symptoms, and avoiding the direct stimulation of the gastrointestinal tract by orally administered plant active components.

During the process of modifying nylon fibers using a combination of plant active components, the inventors discovered the following issues. First, after completing the functional modification of nylon fibers using a plurality of plant active components, the main components and auxiliary components of these active components may not effectively synergize, failing to achieve the desired effects of dispelling wind, relieving pain, and anti-inflammation, resulting in suboptimal improvement and relief of rheumatic pain. Second, the stability of the plurality of plant active components in the nylon fibers may vary, leading to different rates of loss of these components within the nylon fibers. When subjected to external factors (such as washing, high temperature, high humidity, light exposure, etc.), the amount of loss may differ, causing the plant active components within the nylon fibers to fail to cooperate under optimal ratio conditions, thereby affecting the stability and long-term effectiveness of the bio-nylon (e.g., big-bio-nylon) fibers in relieving rheumatic pain. Third, during the functional modification of nylon fibers using a combination of plant active components, due to the large amount of main plant active components (such as sovereign herbs) added, there may be a significant impact on the small amounts of auxiliary plant active components (such as ministerial herbs). Furthermore, the small amounts of auxiliary plant active components may easily be lost during the functional processing of nylon fibers, failing to reach an effective dosage, which may result in the failure of effective cooperation among the plant active components and, consequently, in suboptimal improvement and relief of rheumatic pain.

### Embodiment 1

A method for preparing bio-nylon (e.g., big-bio-nylon) fibers containing plant active components, specifically as follows.

### 1. Extracting a first component

After washing a whole herb of Speranskia tuberculata with 4 times the volume of deionized water, the whole herb is placed in a vacuum drying oven, where the vacuum is maintained at 0.01 MPa, and the vacuum drying temperature is controlled at 60 °C until the moisture content of the whole herb of Speranskia tuberculata is 4 wt%. The dried herb is then transferred to an ultrafine pulverizer, where the pulverizing temperature is controlled at 38 °C, and it is pulverized to 1800 mesh, resulting in a micro-powder of a first active component. The micro-powder is then added to five times the volume of an ethanol aqueous solution, stirred, and heated to 40 °C. After maintaining the temperature and stirring for 5 hours, ultrasonic extraction is performed for 20 minutes. The temperature is then increased to 55 °C, and after maintaining the temperature and stirring for 20 minutes, ultrasonic extraction is performed for 10 minutes. The solid material is filtered out, and the first extraction solution is obtained. The solid material is then added to three times the volume of an ethanol aqueous solution, stirred, and heated to 55 °C. After maintaining the temperature and stirring for 20 minutes, ultrasonic extraction is performed for 10 minutes, and the solid material is filtered out to obtain the second extraction solution. The first and second extraction solutions are combined, and vacuum concentrated at 65 °C under a vacuum degree of 0.04 MPa until the volume is reduced to 30% of the original volume, resulting in the first component solution.

In this process, the ethanol aqueous solution has a volume concentration of 65%.

The ultrasonic extraction is performed at an ultrasonic frequency of 40 kHz and an ultrasonic power of 350 W.

### 2. Extracting a second component

After respectively washing Artemisia argyi, Lygodium japonicum and Carthamus tinctorius with 4 times the volume of deionized water, the herbs are placed in a vacuum drying oven, where the vacuum is maintained at 0.01 MPa, and the vacuum drying temperature is controlled at 60 °C until the moisture content is 4wt%. The dried herbs are then transferred to a jet mill, where they are mixed and pulverized to 100 mesh. The mixture is then placed in an ultrafine pulverizer, where the pulverizing temperature is controlled at 38 °C, and the mixture is pulverized to 1800 mesh, resulting in a micro-powder of the second active component. The micro-powder of the second active component is then added to 5 times the volume of an ethanol aqueous solution, stirred, and heated to 40 °C. After maintaining the temperature and stirring for 5 hours, ultrasonic extraction is performed for 20 minutes. The temperature is then increased to 55 °C, and after maintaining the temperature and stirring for 20 minutes, ultrasonic extraction is performed for 10 minutes. A solid material is filtered out, and a first extraction solution is obtained. The solid material is then added to 3 times the volume of an ethanol aqueous solution, stirred, and heated to 55 °C. After maintaining the temperature and stirring for 20 minutes, ultrasonic extraction is performed for 10 minutes, and the solid material is filtered out to obtain a second extraction solution. The first and second extraction solutions are combined and vacuum concentrated at 65 °C under a vacuum degree of 0.04 MPa until the volume is reduced to 30% of the original volume, resulting in the second component solution.

The Artemisia argyi, the Lygodium japonicum and the Carthamus tinctorius are in a weight ratio of 10:6:0.6.

The ethanol aqueous solution has a volume concentration of 65%.

The ultrasonic extraction is performed at an ultrasonic frequency of 40 kHz and an ultrasonic power of 350 W.

### 3. Preparing a first active component

### 1) First processing

According to a weight ratio of 2:1, nano-mesoporous silica and perlite are added to a high-speed mixer, where the mixing speed is controlled at 700 rpm, and mixed for 5 minutes to obtain a primary powder. The primary powder is then added to 20 times the volume of toluene and ultrasonically dispersed evenly. Under stirring conditions, N-(β-aminoethyl)-γ-aminopropyltrimethoxysilane and γ-aminopropyltrimethoxysilane are added, stirred for 30 minutes, then heated to 80 °C under stirring. After maintaining the temperature and stirring for 10 hours, the solid material is separated, washed twice with 4 times the volume of anhydrous ethanol, and dried at 60 °C for 8 hours to obtain a first processed material.

The nano-mesoporous silica has a particle size of 200 nm, a specific surface area of 550 m²/g, and a pore volume of 0.62 cm³/g.

The primary powder, the N-(β-aminoethyl)-γ-aminopropyltrimethoxysilane, and the γ-aminopropyltrimethoxysilane are in a weight ratio of 8:1:0.8.

### 2) Second processing

The first processed material is added to 13 times the volume of a second processing solution, stirred for 10 hours, and the solid material is separated. After washing with 8 times the volume of deionized water, the solid material is dried to a constant weight in a constant-temperature drying oven to obtain a second processed material.

The second processing solution is an aqueous solution of deionized water in which sodium mercaptoacetate is dissolved. The content of sodium mercaptoacetate in the second processing solution is 8wt%.

### 3) Loading

The first component solution and sodium dodecylbenzenesulfonate are added to an ethanol solution, stirred for 10 minutes, and then the second processed material is added and evenly dispersed. After vacuuming to a vacuum degree of 0.09 MPa and maintaining the vacuum for 30 minutes, the pressure is restored to normal, and the temperature is increased to 35 °C. After maintaining the temperature and stirring for 20 hours, the solid material is filtered out and placed in a vacuum drying oven. The vacuum is controlled at 0.02 MPa, the vacuum drying temperature is 70 °C, and vacuum drying is performed until the moisture content is 1wt%, resulting in a first active component.

The first component solution, the sodium dodecylbenzenesulfonate, the second processed material, and the ethanol solution are in a weight ratio of 16:0.05:7:50. The ethanol aqueous solution has a volume concentration of 50%.

### 4. Preparing a second active component

The second component solution, sodium carboxymethyl cellulose, and maltodextrin are added into deionized water, heated to 40 °C, and emulsified ultrasonically to uniformly form a second component emulsion, which is set aside for later use. Arabic gum and guar gum are added into deionized water, heated to 50 °C, and stirred to form a coating solution. The second component emulsion is then added to 1.8 times the volume of the coating solution, ultrasonically dispersed for 1.5 hours, cooled to 4 °C, and allowed to stand for 2 hours. The solid material is then filtered and placed in a vacuum drying oven, where the vacuum is maintained at 0.05 MPa and the drying temperature is controlled at 70 °C. Vacuum drying is performed until the moisture content is 1wt%, yielding a second active component.

In the second component emulsion, the second component solution, the sodium carboxymethyl cellulose, the maltodextrin, and the deionized water are in a weight ratio of 16:0.4:1:50.

In the coating solution, the Arabic gum, the guar gum, and the deionized water are in a weight ratio of 20:0.8:150.

### 5. Preparing a functional masterbatch

Nylon 66 chips, the first active component, antioxidant 1790, and sodium stearate are mixed uniformly and then added to a screw extruder, while temperature is controlled at 260 °C, and after being in a molten state, extruding and granulating are performed to obtain a first functional masterbatch. Simultaneously, nylon 66 chips, the second active component, antioxidant 1790, and sodium stearate are mixed uniformly and added to a screw extruder, while the temperature is controlled at 260 °C, and after being in a molten state, extruding and granulating are performed to obtain a second functional masterbatch.

As used herein, the term Nylon 66 refers to a type of polyamide or nylon. Nylon 66 is made of two monomers each containing 6 carbon atoms, hexamethylenediamine and adipic acid. Nylon 66 (or "Poly[imino(1,6-dioxohexamethylene) iminohexamethylene]") has a chemical formula of (C₁₂H₂₂N₂O₂)ₙ.

As used herein, the term antioxidant 1790 refers to 1,3,5-tris[(4-tert-butyl-3-hydroxy-2,6-dimethylphenyl)methyl]-1,3,5-triazinane-2,4,6-trione with a chemical formula of C₄₂H₅₇N₃O₆.

In the first functional masterbatch, the nylon 66 chips, the first active component, the antioxidant 1790, and the sodium stearate are in a weight ratio of 80:10:1:0.7.

In the second functional masterbatch, the nylon 66 chips, the second active component, the antioxidant 1790, and the sodium stearate are in a weight ratio of 80:20:1:0.7.

### 6. Spinning

Nylon 66 chips, the first functional masterbatch, and the second functional masterbatch are mixed uniformly. The temperature is controlled at the melting temperature of 260 °C; and after extrusion melting, a screw spinning machine is used, and the spinning speed is controlled at 1600 m/min for producing fibers. The fibers are then drawn, oiled, and wound to produce bio-nylon fibers containing plant active components.

The nylon 66 chips, the first functional masterbatch, and the second functional masterbatch are in a weight ratio of 100:4:7.

As disclosed herein, the bio-nylon fibers containing plant active components are prepared using the aforementioned preparation method.

### Embodiment 2

A method for preparing bio-nylon fibers containing plant active components, specifically as follows:

### 1. Extracting a first component

After washing a whole herb of Speranskia tuberculata with 6 times the volume of deionized water, the whole herb is placed in a vacuum drying oven, where the vacuum is maintained at 0.015 MPa and the drying temperature is controlled at 65 °C until the moisture content of the whole herb of Speranskia tuberculata is 5wt%. The dried herb is then transferred to an ultrafine pulverizer, where the pulverizing temperature is controlled at 40 °C, and the dried herb is pulverized to 1900 mesh, resulting in a micro-powder of a first active component. The micro-powder is then added to an ethanol aqueous solution at 5.5 times its volume, stirred, and heated to 45 °C. After maintaining the temperature and stirring for 5.5 hours, ultrasonic extraction is performed for 25 minutes. The temperature is then increased to 60 °C, and after maintaining the temperature and stirring for 25 minutes, ultrasonic extraction is performed for 15 minutes. A solid material is filtered out, and a first extraction solution is obtained. The solid material is then added to 3.5 times the volume of an ethanol aqueous solution, stirred, and heated to 60 °C. After maintaining the temperature and stirring for 25 minutes, ultrasonic extraction is performed for 15 minutes. A solid material is filtered out to obtain a second extraction solution. The first extraction solution and the second extraction solution are combined, and vacuum concentrated at 70 °C under a vacuum degree of 0.045 MPa until the volume is reduced to 32% of the original volume, resulting in a first component solution.

In this process, the ethanol aqueous solution has an ethanol concentration of 70%.

The ultrasonic extraction has an ultrasonic frequency of 42 kHz and an ultrasonic power of 400 W.

### 2. Extracting a second component

After respectively washing Artemisia argyi, Lygodium japonicum and Carthamus tinctorius with 6 times the volume of deionized water, the herbs are placed in a vacuum drying oven, where the vacuum is maintained at 0.015 MPa and the drying temperature is controlled at 65 °C until the moisture content is 5wt%. The dried herbs are then transferred to a jet mill, where they are mixed and pulverized to 120 mesh. The mixture is then placed in an ultrafine pulverizer, where the pulverizing temperature is controlled at 40 °C, and it is pulverized to 1900 mesh, resulting in a micro-powder of a second active component. The micro-powder is then added 5.5 times the volume of an ethanol aqueous solution, stirred, and heated to 45 °C. After maintaining the temperature and stirring for 5.5 hours, ultrasonic extraction is performed for 25 minutes. The temperature is then increased to 60 °C, and after maintaining the temperature and stirring for 25 minutes, ultrasonic extraction is performed for 15 minutes. A solid material is filtered out, and a first extraction solution is obtained. The solid material is then added to 3.5 times the volume of an ethanol aqueous solution, stirred, and heated to 60 °C. After maintaining the temperature and stirring for 25 minutes, ultrasonic extraction is performed for 15 minutes. A solid material is filtered out to obtain a second extraction solution. The first extraction solution and the second extraction solution are combined and vacuum concentrated at 70 °C under a vacuum degree of 0.045 MPa until the volume is reduced to 32% of the original volume, resulting in a second component solution.

The Artemisia argyi, the Lygodium japonicum and the Carthamus tinctorius are in a weight ratio of 11:6.5:0.7.

The ethanol aqueous solution has an ethanol concentration of 70%.

The ultrasonic extraction is performed at an ultrasonic frequency of 42 kHz, and an ultrasonic power of 400 W.

### 3. Preparing a first active component

### 1) First processing

According to a weight ratio of 2.5:1, nano-mesoporous silica and perlite are added to a high-speed mixer, where the mixing speed is controlled at 750 rpm, and mixed for 8 minutes to obtain a primary powder. The primary powder is then added to 21 times the volume of toluene and ultrasonically dispersed evenly. Under stirring conditions, N-(β-aminoethyl)-γ-aminopropyltrimethoxysilane and γ-aminopropyltrimethoxysilane are added, stirred for 35 minutes, then heated to 85 °C while stirring. After maintaining the temperature and stirring for 11 hours, a solid material is separated. The solid material is washed 3 times with 5 times the volume of anhydrous ethanol and dried at 65 °C for 9 hours to obtain a first processed material.

The nano-mesoporous silica has a particle size of 220 nm, a specific surface area of 590 m²/g, and a pore volume of 0.65 cm³/g.

The primary powder, the N-(β-aminoethyl)-γ-aminopropyltrimethoxysilane, and the γ-aminopropyltrimethoxysilane are in a weight ratio of 9:1.5:0.9.

### 2) Second processing

The first processed material is added to 14 times the volume of a second processing solution, stirred for 11 hours, and a solid material is separated. After washing with deionized water at 9 times its volume, the solid material is dried to constant weight in a constant-temperature drying oven to obtain a second processed material.

The second processing solution is an aqueous solution of deionized water in which sodium mercaptoacetate is dissolved. In the second processing solution, the sodium mercaptoacetate has a content of 9wt%.

### 3) Loading

The first component solution and sodium dodecylbenzene sulfonate are added to an ethanol solution, stirred for 15 minutes, and then the second processed material is added and evenly dispersed. After vacuuming to a vacuum degree of 0.092 MPa and maintaining the vacuum for 40 minutes, the pressure is restored to normal, and the temperature is increased to 38 °C. After maintaining the temperature and stirring for 22 hours, the solid material is filtered out and placed in a vacuum drying oven. The vacuum is controlled at 0.025 MPa, the vacuum drying temperature is 75 °C, and vacuum drying is performed until the moisture content is 1.2wt%, yielding the first active component.

The first component solution, the sodium dodecylbenzene sulfonate, the second processed material, and the ethanol solution are in a weight ratio of 17:0.055:7.5:55.

### The ethanol solution has a volume concentration of 55%.

### 4. Preparing a second active component

The second component solution, sodium carboxymethyl cellulose, and maltodextrin are added into deionized water, heated to 45 °C, and ultrasonically emulsified to uniformly form a second component emulsion, which is set aside for later use. Arabic gum and guar gum are added into deionized water, heated to 55 °C, and stirred to form a coating solution. The second component emulsion is then added to 2 times the volume of the coating solution, ultrasonically dispersed for 2 hours, cooled to 5 °C, and allowed to stand for 3 hours, resulting in a solid material. The solid material is then filtered and placed in a vacuum drying oven, where the vacuum is maintained at 0.055 MPa and the drying temperature is controlled at 75 °C. Vacuum drying is performed until the moisture content is 1.2wt%, yielding the second active component.

In the second component emulsion, the second component solution, the sodium carboxymethyl cellulose, the maltodextrin, and the deionized water are in a weight ratio of 17:0.45:1.3:55.

In the coating solution, the Arabic gum, the guar gum, and the deionized water are in a weight ratio of 22:0.9:155.

### 5. Preparing a functional masterbatch

Nylon 66 chips, the first active component, antioxidant 1790, and sodium stearate are mixed uniformly and then added to a screw extruder, while temperature is controlled at 263 °C, and after being in a molten state, extrusion and granulating are performed to obtain a first functional masterbatch. Simultaneously, nylon 66 chips, the second active component, antioxidant 1790, and sodium stearate are mixed uniformly and added to a screw extruder, while the temperature is controlled at 263 °C, and after being in a molten state, extruding and granulating are performed to obtain a second functional masterbatch.

In the first functional masterbatch, the nylon 66 chips, the first active component, the antioxidant 1790, and the sodium stearate are in a weight ratio of 85:10.5:1.1:0.75.

In the second functional masterbatch, the nylon 66 chips, the second active component, the antioxidant 1790, and the sodium stearate are in a weight ratio of 85:21:1.1:0.75.

### 6. Spinning

Nylon 66 chips, the first functional masterbatch, and the second functional masterbatch are mixed uniformly. The temperature is controlled at the melting temperature of 263°C. After extrusion melting, a screw spinning machine is used, and the spinning speed is controlled at 1700 m/min for producing fibers. The fibers are then drawn, oiled, and wound to obtain bio-nylon fibers containing plant active components.

The nylon 66 chips, the first functional masterbatch, and the second functional masterbatch are in a weight ratio of 100:4.7:7.5.

As disclosed herein, the bio-nylon fibers containing plant active components are prepared using the aforementioned preparation method.

### Embodiment 3

A method for preparing bio-nylon fibers containing plant active components, specifically as follows:

### 1. Extracting a first component

After washing a whole herb of Speranskia tuberculata with 8 times the volume of deionized water, the whole herb is placed in a vacuum drying oven, where the vacuum is maintained at 0.02 MPa and the drying temperature is controlled at 70°C until the moisture content of the whole herb of Speranskia tuberculata is 6wt%, resulting in a dried herb. The dried herb is then transferred to an ultrafine pulverizer, where the pulverizing temperature is controlled at 42°C, and the dried herb is pulverized to 2000 mesh, resulting in a micro-powder of a first active component. The micro-powder is then added to 6 times the volume of an ethanol aqueous solution, stirred, and heated to 50°C. After maintaining the temperature and stirring for 6 hours, ultrasonic extraction is performed for 30 minutes. The temperature is then increased to 65°C, and after maintaining the temperature and stirring for 30 minutes, ultrasonic extraction is performed for 20 minutes. A solid material is filtered out, and a first extraction solution is obtained. The solid material is then added to 4 times the volume of an ethanol aqueous solution, stirred, and heated to 65°C. After maintaining the temperature and stirring for 30 minutes, ultrasonic extraction is performed for 20 minutes, and a solid material is filtered out to obtain a second extraction solution. The first extraction solution and the second extraction solution are combined and vacuum concentrated at 75°C under a vacuum degree of 0.05 MPa until the volume is reduced to 35% of the original volume, resulting in a first component solution.

In this process, the ethanol aqueous solution has an ethanol concentration of 75%.

The ultrasonic extraction has an ultrasonic frequency of 45 kHz, and an ultrasonic power of 450 W.

### 2. Extracting a second component

After respectively washing Artemisia argyi, Lygodium japonicum and Carthamus tinctorius with 8 times the volume of deionized water, the herbs are placed in a vacuum drying oven, where the vacuum is maintained at 0.02 MPa and the drying temperature is controlled at 70°C until the moisture content is 6wt%, resulting in dried herbs. The dried herbs are then transferred to a jet mill, then mixed and pulverized to 150 mesh, resulting in a mixture. The mixture is then placed in an ultrafine pulverizer, where the pulverizing temperature is controlled at 42°C, and the mixture is pulverized to 2000 mesh, resulting in a micro-powder of a second active component. The micro-powder is then added to 6 times the volume of an ethanol aqueous solution, stirred, and heated to 50°C. After maintaining the temperature and stirring for 6 hours, ultrasonic extraction is performed for 30 minutes. The temperature is then increased to 65°C, and after maintaining the temperature and stirring for 30 minutes, ultrasonic extraction is performed for 20 minutes. A solid material is filtered out, and a first extraction solution is obtained. The solid material is then added to 4 times the volume of an ethanol aqueous solution, stirred, and heated to 65°C. After maintaining the temperature and stirring for 30 minutes, ultrasonic extraction is performed for 20 minutes. The solid material is filtered out to obtain a second extraction solution. The first extraction solution and the second extraction solution are combined and vacuum concentrated at 75°C under a vacuum degree of 0.05 MPa until the volume is reduced to 35% of the original volume, resulting in a second component solution.

The Artemisia argyi, the Lygodium japonicum and the Carthamus tinctorius are in a weight ratio of 12:7:0.8.

The ethanol aqueous solution has an ethanol concentration of 75%.

The ultrasonic extraction has an ultrasonic frequency of 45 kHz, and an ultrasonic power of 450 W.

### 3. Preparing a first active component

### 1) First processing

According to a weight ratio of 3:1, nano-mesoporous silica and perlite are added to a high-speed mixer, where the mixing speed is controlled at 800 rpm, and mixed for 10 minutes to obtain a primary powder. The primary powder is then added to 22 times the volume of toluene and ultrasonically dispersed evenly. Under stirring conditions, N-(β-aminoethyl)-γ-aminopropyltrimethoxysilane and γ-aminopropyltrimethoxysilane are added, stirred for 40 minutes, then heated to 90°C under stirring. After maintaining the temperature and stirring for 12 hours, a solid material is separated, washed 3 times with 6 times the volume of anhydrous ethanol, and dried at 70°C for 10 hours to obtain a first processed material.

The nano-mesoporous silica has a particle size of 200-250 nm, a specific surface area of 550-600 m²/g, and a pore volume of 0.62-0.66 cm³/g.

The primary powder, the N-(β-aminoethyl)-γ-aminopropyltrimethoxysilane, and the γ-aminopropyltrimethoxysilane are in a weight ratio of 10:2:1.

### 2) Second processing

The first processed material is added to 15 times the volume of a second processing solution, stirred for 12 hours, and a solid material is separated. After washing with 10 times the volume of deionized water, the solid material is dried to constant weight in a constant-temperature drying oven to obtain a second processed material.

The second processing solution is an aqueous solution of deionized water in which sodium mercaptoacetate is dissolved. In the second processing solution, the sodium mercaptoacetate has a content of 10wt%.

### 3) Loading

The first component solution and sodium dodecylbenzenesulfonate are added to an ethanol solution, stirred for 20 minutes, and then the second processed material is added and evenly dispersed. After vacuuming to a vacuum degree of 0.095 MPa and maintaining the vacuum for 50 minutes, the pressure is restored to normal, and the temperature is increased to 40°C. After maintaining the temperature and stirring for 24 hours, the solid material is filtered out and placed in a vacuum drying oven. The vacuum is controlled at 0.03 MPa, the vacuum drying temperature is 80°C, and vacuum drying is performed until the moisture content is 1.5wt%, yielding the first active component.

The first component solution, the sodium dodecylbenzenesulfonate, the second processed material, and the ethanol solution are in a weight ratio of 18:0.06:8:60.

The ethanol solution has an ethanol concentration of 60%.

### 4. Preparing a second active component

The second component solution, sodium carboxymethyl cellulose, and maltodextrin are added into deionized water, heated to 50°C, and ultrasonically emulsified to form a uniform second component emulsion, which is set aside for later use. Arabic gum and guar gum are added into deionized water, heated to 60°C, and stirred to form a coating solution. The second component emulsion is then added to 2.2 times the volume of the coating solution, ultrasonically dispersed for 2.5 hours, cooled to 6°C, and allowed to stand for 4 hours. The solid material is then filtered and placed in a vacuum drying oven, where the vacuum is maintained at 0.06 MPa and the drying temperature is controlled at 80°C. Vacuum drying is performed until the moisture content is 1.5wt%, yielding the second active component.

In the second component emulsion, the second component solution, the sodium carboxymethyl cellulose, the maltodextrin, and the deionized water are in a weight ratio of 18:0.5:1.5:60.

In the coating solution, the Arabic gum, the guar gum, and the deionized water are in a weight ratio of 25:1:160.

### 5. Preparing a functional masterbatch

Nylon 66 chips, the first active component, antioxidant 1790, and sodium stearate are mixed uniformly and then added to a screw extruder, while the temperature is controlled at 265°C, and after being in a molten state, extruding and granulating are performed to obtain a first functional masterbatch. Simultaneously, nylon 66 chips, the second active component, antioxidant 1790, and sodium stearate are mixed uniformly and added to a screw extruder, while the temperature is controlled at 265°C, and after being in a molten state, extruding and granulating are performed to obtain a second functional masterbatch.

In the first functional masterbatch, the nylon 66 chips, the first active component, the antioxidant 1790, and the sodium stearate are in a weight ratio of 90:11:1.2:0.8.

In the second functional masterbatch, the nylon 66 chips, the second active component, the antioxidant 1790, and the sodium stearate are in a weight ratio of 90:22:1.2:0.8.

### 6. Spinning

Nylon 66 chips, the first functional masterbatch, and the second functional masterbatch are mixed uniformly. The temperature is controlled at the melting temperature of 265°C, and after extrusion melting, a screw spinning machine is used, and the spinning speed is controlled at 1800 m/min for producing fibers. The fibers are then drawn, oiled, and wound to obtain bio-nylon fibers containing plant active components.

The nylon 66 chips, the first functional masterbatch, and the second functional masterbatch are in a weight ratio of 100:5:8.

As disclosed herein, the bio-nylon fibers containing plant active components are prepared using the aforementioned preparation method.

### Comparative Example 1

The preparation method of bio-nylon fiber containing plant active components in Embodiment 2 is adopted, where the differences are: (1) omitting the step of extracting a first component, and in the step of extracting a second component, the subsequent extracting steps are performed with Speranskia tuberculata, Artemisia argyi, Lygodium japonicum and Carthamus tinctorius together to obtain a total component solution, where Speranskia tuberculata, Artemisia argyi, Lygodium japonicum and Carthamus tinctorius are in a weight ratio of 30:11:6.5:0.7; and (2) omitting the step of preparing a second active component, and in the step of loading, the aforementioned total component solution is used for preparing a first active component.

### Comparative Example 2

The preparation method of bio-nylon fiber containing plant active components in Embodiment 2 is adopted, where the differences are: (1) in the step of preparing a second active component, the first component solution is used for preparing the second active component, followed by the step of preparing a first functional masterbatch; (2) in the step of preparing a first active component, the second component solution is used for preparing the first active component, followed by the step of preparing a second functional masterbatch; and (3) in the step of spinning, nylon 66 chips, the first functional masterbatch, and the second functional masterbatch are in a weight ratio of 100:6:6.5.

### Comparative Example 3

The preparation method of bio-nylon fiber containing plant active components in Embodiment 2 is adopted, where the differences are: (1) in the step of preparing a first active component, a primary powder obtained from the first processing is used instead of a second processed material in the step of loading; and (2) in the step of preparing a second active component, a second component emulsion is added into a coating solution, dispersed by ultrasound, and then spray-dried to obtain the second active component.

The bio-nylon fiber containing plant active components from Embodiments 1-3 and Comparative Example 1 is blended with spandex to make experimental bandages, where the content of bio-nylon fiber containing plant active components in each experimental bandage is controlled at 94wt%, and the content of spandex is 6wt%.

A total of 120 volunteers aged 30-50 years suffering from rheumatic pain (such as rheumatic low back pain, rheumatic joint pain, rheumatic neck and shoulder pain, etc.) are selected, and the number of male and female volunteers is controlled to be equal. The 120 volunteers are randomly divided into 6 groups, where the number of males and females in each group is also controlled to be equal.

Groups 1-3 correspond to the application of the experimental bandages of Embodiments 1-3, and groups 4-6 correspond to the application of the experimental bandages of Comparative Examples 1-3. The specific method of application is: after cleaning the skin in the rheumatic pain area daily, the experimental bandage is fixed to the rheumatic pain area, where the experimental bandage is kept fixed for at least 12 hours every day, and applied continuously for 42 days. At the same time, during the continuous application period, the experimental bandage undergoes regular washing once every two days. The effectiveness of each experimental bandage is investigated (significantly effective, effective, ineffective), and the corresponding number of volunteers is counted; in addition, the number of volunteers with recurrence or aggravation of rheumatic pain among those who experienced significantly effective and effective relief during the application period and within 7 days after stopping the application is also counted.

A significantly effective result is defined as the effective elimination of rheumatic pain in the fixed area of the experimental bandage, with no recurrence during the application period.

An effective result is defined as significant alleviation of rheumatic pain in the fixed area of the experimental bandage, with no aggravation during the application period.

An ineffective result is defined as no significant difference in rheumatic pain in the fixed area of the experimental bandage compared to the absence of the experimental bandage.

The specific test results are as follows:

| Item | Embodiment 1 | Embodiment 2 | Embodiment 3 | Comparative Example 1 | Comparative Example 2 | Comparative Example 3 |
|---|---|---|---|---|---|---|
| Number of people with significantly effective results, persons | 15 | 16 | 15 | 10 | 12 | 13 |
| Number of people with effective results, persons | 5 | 4 | 5 | 6 | 7 | 7 |
| Number of people with ineffective results, persons | 0 | 0 | 0 | 4 | 1 | 0 |
| Number of people whose rheumatic pain recurred or worsened within 7 days after stopping the application, persons | 0 | 0 | 0 | 3 | 1 | 1 |
| Sum of significantly effective rate and effective rate, % | 100 | 100 | 100 | 80 | 95 | 100 |
| Ineffective rate, % | 0 | 0 | 0 | 20 | 5 | 0 |

It may be seen that in the bio-nylon fiber containing plant active components of the present disclosure, the first active component containing the sovereign herb Speranskia tuberculata is combined with the second active component containing the ministerial herb Artemisia argyi, the adjuvant herb Lygodium japonicum, and the guiding herb Carthamus tinctorius, where the effective controlled release of each plant active component in the first and second active components is achieved through different processing methods. This allows the active components to remain within the effective dosage ratio range for a long period, resulting in improved and alleviated rheumatic pain. Furthermore, during the test process, the experimental bandages underwent multiple routine washings and were still able to achieve the aforementioned effect. This also demonstrates that the plant active components in the bio-nylon fiber of the present disclosure combine well with the nylon fiber and maintain good long-term effectiveness.

It may be seen from Comparative Example 1 that when using the process method where all the plant active components are mixed and then loaded, on the one hand, the cooperation effect of the plant active components is not ideal; on the other hand, due to the large addition of the sovereign herb, the smaller amounts of the adjuvant herb and the guiding herb are greatly affected, hindering the efficacy of the adjuvant herb and the guiding herb, which also leads to poor cooperation of the plant active components. This is specifically manifested as a reduction in the number of people with significant effects, an increase in the inefficacy rate, and an increase in the number of people whose rheumatic pain recurred or worsened after stopping the use of the experimental bandage.

It may be seen from Comparative Example 2 that using the preparation method of the second active component to treat the first component solution containing the sovereign herb Speranskia tuberculata and prepare the first functional masterbatch, and using the preparation method of the first active component to treat the second component solution containing the ministerial herb Artemisia argyi, the adjuvant herb Lygodium japonicum, and the guiding herb Carthamus tinctorius to prepare the second functional masterbatch, due to the change in the processing methods for different components, the release amount of each component in the bio-nylon fiber could not be effectively and stably controlled. This resulted in the inability of the active components to cooperate within the effective dosage ratio range, leading to an inability to effectively improve and alleviate rheumatic pain. This was specifically manifested as a reduction in the number of people with significant effects, an increase in the inefficacy rate, and an increase in the number of people whose rheumatic pain recurred or worsened after stopping the use of the experimental bandage.

It may be seen from Comparative Example 3 that in the preparation process of the first active component of the present disclosure, after modifying the primary powder with amino silane for amino modification and further modifying the first processed material with sodium mercaptoacetate for mercapto modification, the sovereign herb Speranskia tuberculata in the first active component may be effectively loaded and controlled for release. At the same time, combined with the coating in preparing the second active component, the coating and controlled release effects of the ministerial herb Artemisia argyi, the adjuvant herb Lygodium japonicum, and the guiding herb Carthamus tinctorius in the second active component may be improved, thereby allowing the active components to cooperate within the effective dosage ratio range. After omitting the relevant technical means in Comparative Example 3, the effect of improving and alleviating rheumatic pain showed a certain degree of decline.

Further, according to the antibacterial content specified in GB/T 20944.3-2008 "Textiles - Evaluation of Antibacterial Performance - Part 3: Oscillation Method," antibacterial performance tests were performed on the bio-nylon fiber containing plant active components of Embodiments 1-3 and Comparative Examples 1-3, where the specific test results are as follows:

| Project | Embodiment 1 | Embodiment 2 | Embodiment 3 | Comparative Experiment 1 | Comparative Experiment 2 | Comparative Experiment 3 |
|---|---|---|---|---|---|---|
| Inhibition rate against Staphylococcus aureus, % | 99.7 | 99.8 | 99.7 | 99.2 | 99.6 | 96.4 |
| Inhibition rate against Escherichia coli, % | 99.1 | 99.1 | 99.0 | 98.5 | 99.0 | 96.2 |
| Inhibition rate against Klebsiella pneumoniae, % | 98.0 | 98.3 | 98.1 | 97.4 | 98.0 | 94.9 |
| Inhibition rate against Candida albicans, % | 95.9 | 96.0 | 95.7 | 95.0 | 95.8 | 92.5 |

It may be seen that the bio-nylon fiber containing plant active components of the present disclosure, in addition to the aforementioned ability to specifically improve and alleviate rheumatic pain, also includes good antibacterial functionality. It may be seen from Comparative Example 1 and Comparative Example 2 that changing the processing method of the plant active components has a minimal impact on the antibacterial performance of the bio-nylon fiber. It may be seen from Comparative Example 3 that omitting the amino and mercapto synergistic modification processing of the primary powder, as well as changing the coating process of the second active component, affects the loading or coating effect of the plant active components. In the subsequent functional processing of the nylon fiber, the plant active components are prone to loss, specifically manifesting as a decrease in antibacterial performance.

Further, the bio-nylon fiber containing plant active components of Embodiments 1-3 and Comparative Examples 1-3 is each spun into fabric and then cut into stability samples measuring 20 cm * 20 cm. Each stability sample is placed in an environment with a temperature of 42 °C and a relative humidity of 75%, and after being exposed to continuous irradiation of a 100W xenon lamp for 960 hours, antibacterial performance tests are conducted on each stability sample using the aforementioned antibacterial performance detection method.

The specific test results are as follows:

| Project | Embodiment 1 | Embodiment 2 | Embodiment 3 | Comparative Experiment 1 | Comparative Experiment 2 | Comparative Experiment 3 |
|---|---|---|---|---|---|---|
| Inhibition rate against Staphylococcus aureus, % | 92.5 | 93.0 | 92.8 | 89.6 | 92.2 | 82.5 |
| Inhibition rate against Escherichia coli, % | 91.7 | 92.1 | 92.0 | 88.4 | 91.2 | 82.1 |
| Inhibition rate against Klebsiella pneumoniae, % | 90.8 | 91.1 | 90.9 | 87.2 | 90.3 | 80.6 |
| Inhibition rate against Candida albicans, % | 88.6 | 89.2 | 88.7 | 85.1 | 88.2 | 78.2 |

It may be seen that in the bio-nylon fiber containing plant active components of the present disclosure, the plant active components are firmly combined with the bio-nylon fiber, and the plant active components exhibit good stability in the nylon fiber. The plant active components are not easily lost when subjected to external factors (such as washing, high temperature, high humidity, light, etc.), and maintain good long-term effectiveness. It may be seen from Comparative Example 1 that after omitting the preparation of the second active component, due to the singular processing method of the plant active components, the various components are unable to cooperate to achieve an antibacterial effect, and during long-term static placement, there is a problem of loss of active components. It may be seen from Comparative Example 2 that changing the processing method of the plant active components has a minimal impact on the stability of the bio-nylon fiber. It may be seen from Comparative Example 3 that omitting the amino and mercapto synergistic modification processing of the primary powder and changing the coating process of the second active component, affects the loading or coating effect of the plant active components. In the subsequent functional processing of the nylon fiber, the plant active components are easily lost, and when subjected to external factors (such as washing, high temperature, high humidity, light, etc.), the loss of active components is significant, specifically manifesting as a reduction in antibacterial performance.

Further, the breaking strength and breaking elongation rate of the bio-nylon fiber containing plant active components, prepared in Embodiments 1-3 and Comparative Examples 1-3, were tested. The specific test results are as follows:

| Project | Embodiment 1 | Embodiment 2 | Embodiment 3 | Comparative Experiment 1 | Comparative Experiment 2 | Comparative Experiment 3 |
|---|---|---|---|---|---|---|
| Breaking strength, cN/dtex | 5.6 | 5.9 | 5.6 | 5.5 | 5.8 | 5.0 |
| Breaking elongation rate, % | 24 | 25 | 25 | 23 | 24 | 21 |

It may be seen that in the bio-nylon fiber containing plant active component of the present disclosure, the plant active component may effectively bind with the bio-nylon fiber. This enables functional modification of the nylon fiber while avoiding a reduction in the physical properties of the modified nylon fiber, effectively maintaining the good physical performance of the nylon fiber. The significant deterioration in the physical properties of the nylon fiber in Comparative Example 3 is due to the omission of the amino and mercapto synergistic modification processing of the primary powder, resulting in poor dispersion of the first active component in the nylon fiber, which leads to a reduction in the physical properties of the nylon fiber. Additionally, the change in the preparation process of the second active component further reduces the coating effect, which also affects the physical properties of the nylon fiber to a certain extent.

In summary, it may be seen that the preparation method of the bio-nylon fiber containing plant active component in the present disclosure involves extracting the first component from Speranskia tuberculata to obtain a first component solution containing the main plant active component. The second component is extracted from Artemisia argyi, Lygodium japonicum and Carthamus tinctorius to obtain a second component solution containing auxiliary plant active components. During the preparation of the first active component, amino modification of the primary powder is performed using amino silane, followed by mercapto modification processing of the first processed material using sodium mercaptoacetate, and then loading the first component solution containing the main plant active component. During the preparation of the second active component, the second component emulsion containing auxiliary plant active component is subjected to coating. Functional masterbatches are prepared separately from the first and second active components, which are then used in the functional modification process of the nylon fiber. This method effectively avoids the problem during the functional modification process of the nylon fiber, where the large amount of the main plant active component (such as the sovereign herb component) significantly affects the smaller doses of auxiliary plant active component (such as the guiding herb component). Additionally, it prevents the issue where the small doses of auxiliary plant active components are easily lost during the functional processing of the nylon fiber, failing to reach an effective dose, which prevents the plant active component from effectively cooperating. The resulting bio-nylon fiber containing plant active components includes various plant active components, with the main and auxiliary components effectively cooperating to specifically improve and alleviate corresponding symptoms. Furthermore, the various plant active components exhibit good stability in the nylon fiber, with minimal loss. The loss of active components may be controlled within the permissible range of efficacy, allowing the multiple plant active components in the nylon fiber to cooperate under optimal ratio conditions for an extended period, providing stable and long-lasting improvement and alleviation of the corresponding symptoms.

Unless otherwise specified, all percentages used in the present disclosure are mass percentages.

Compared to the prior art, the beneficial effects of the disclosure are as follows:
(1) The method for preparing bio-nylon fiber containing plant active components disclosed herein includes: extracting a first component from the sovereign herb Speranskia tuberculata to obtain a first component solution containing primary plant active components; and extracting a second component from the ministerial herb Artemisia argyi, the adjuvant herb Lygodium japonicum, and the guiding herb Carthamus tinctorius to obtain a second component solution containing auxiliary plant active components. In preparing the first active component, the primary powder is modified with aminosilane, and the first processed material is further modified with sodium mercaptoacetate, followed by loading the first component solution containing the primary plant active components. In preparing the second active component, the second component emulsion containing auxiliary plant active components undergoes an encapsulation process. The first active component and the second active component are used to prepare functional masterbatches, which are then applied for the functional modification of nylon fiber. This method may effectively avoid the problem during the functional modification process of nylon fiber, where the addition of the primary plant active components (such as the sovereign herb components) in larger quantities negatively impacts the small doses of auxiliary plant active components (such as the guiding herb components). It also addresses the issue of the auxiliary plant active components in small doses easily being lost during the functional treatment of nylon fiber, failing to reach an effective dose, leading to the plant active components not cooperating effectively. In the bio-nylon fiber containing plant active components prepared by the disclosed method, the primary and auxiliary plant active components may effectively cooperate to specifically improve and relieve corresponding symptoms. At the same time, the plant active components maintain good stability in the nylon fiber and are not easily lost. The loss of each active component may be controlled within the range allowed for efficacy, allowing the plant active components within the nylon fiber to maintain their optimal ratio over time, resulting in stable and long-lasting improvement and relief of corresponding symptoms.
(2) In the bio-nylon fiber containing plant active components disclosed herein, the first active component containing the Speranskia tuberculata extract (sovereign herb) is combined with the second active component containing extracts of Artemisia argyi (ministerial herb), Lygodium japonicum (adjuvant herb), and Carthamus tinctorius (guiding herb), and different processing methods are used to control the release of the plant active components in the first and second active components. This allows the plant active components to remain effective within their dosage range over time, thereby improving and relieving rheumatic pain. Trials have shown that the disclosed method may effectively eliminate or significantly relieve soft tissue rheumatic pain in patients, with no recurrence or exacerbation during the application period. The combined effectiveness and efficiency rate reaches 100%. Additionally, within seven days after stopping the application, there is no recurrence or exacerbation of rheumatic pain.
(3) The bio-nylon fiber containing plant active components disclosed herein, in addition to specifically improving and relieving rheumatic pain, also has good antibacterial properties. Testing has shown that the bio-nylon fiber achieves an antibacterial rate of 99.7%-99.8% against Staphylococcus aureus, 99.0%-99.1% against Escherichia coli, 98.0%-98.3% against Klebsiella pneumoniae, and 95.7%-96.0% against Candida albicans.
(4) In the bio-nylon fiber containing plant active components disclosed herein, the plant active components are firmly combined with the nylon fiber, maintaining good stability even when exposed to external factors such as washing, high temperature, high humidity, and light. The fiber retains long-term effectiveness. Tests have shown that after 960 hours of exposure to continuous light at 42°C and 75% relative humidity, the antibacterial rate of the bio-nylon fiber remains at 92.5%-93.0% against Staphylococcus aureus, 91.7%-92.1% against Escherichia coli, 90.8%-91.1% against Klebsiella pneumoniae, and 88.6%-89.2% against Candida albicans.
(5) The bio-nylon fiber containing plant active components disclosed herein allows the plant active components to effectively bind with the bio-nylon fiber, ensuring that the functional modification of the nylon fiber does not reduce its physical properties. Testing has shown that the bio-nylon fiber containing plant active components achieves a breaking strength of 5.6-5.9 cN/dtex and an elongation at break of 24-25%.
(6) The bio-nylon fiber containing plant active components disclosed herein may be used in downstream applications to produce products such as bandages, joint sleeves, shoulder braces, waist supports, and even vests and other undergarments. These products may improve and relieve corresponding symptoms while avoiding the adverse effects that the oral intake of multiple plant active components may have on the gastrointestinal tract and liver, further expanding the application scope of the bio-nylon fiber.

## Claims

1. A method for preparing a bio-nylon fiber comprising plant active components, wherein the method comprises extracting a first component, extracting a second component, preparing a first active component, preparing a second active component, preparing a functional masterbatch, and spinning,
wherein extracting the first component comprises: drying a whole herb of Speranskia tuberculata, pulverizing, performing an ultrasonic extraction twice using an ethanol aqueous solution to obtain a first extraction solution of the first component and a second extraction solution of the first component respectively, combining the first extraction solution of the first component and the second extraction solution of the first component, and concentrating to obtain a first component solution;
wherein extracting the second component comprises: drying Artemisia argyi, Lygodium japonicum and Carthamus tinctorius, mixing and pulverizing, performing an ultrasonic extraction twice using an ethanol aqueous solution to obtain a first extraction solution of the second component and a second extraction solution of the second component respectively, combining the first extraction solution of the second component and the second extraction solution of the second component, and concentrating to obtain a second component solution;
wherein preparing the first active component comprises first processing, second processing and loading,
wherein the first processing comprises: mixing nano-mesoporous silica and perlite to obtain a primary powder, placing the primary powder into toluene and ultrasonically dispersing evenly; adding N-(β-aminoethyl)-γ-aminopropyltrimethoxysilane and γ-aminopropyltrimethoxysilane to form a mixture while stirring; increasing temperature while stirring, and separating the mixture to obtain a solid material; and washing the solid material with anhydrous ethanol, and drying the solid material to obtain a first processed material;
wherein the second processing comprises: placing the first processed material into 13-15 times the volume of a second processing solution to obtain a mixture, stirring the mixture, and separating the mixture to obtain a solid material; and washing the solid material with deionized water, drying the solid material to obtain a second processed material, wherein the second processing solution is a deionized aqueous solution of sodium mercaptoacetate; and
wherein the loading comprises: adding the first component solution and sodium dodecylbenzenesulfonate into an ethanol solution, and stirring evenly; adding the second processed material, and dispersing evenly to obtain a mixture; vacuuming until a vacuum degree reaches 0.09-0.095 MPa, maintaining at the vacuum degree; restoring to a normal pressure, and raising temperature; and stirring the mixture, filtering the mixture to obtain a solid material, and vacuum drying the solid material to obtain the first active component;
wherein preparing the second active component comprises: adding the second component solution, sodium carboxymethyl cellulose, and maltodextrin to deionized water, and ultrasonically emulsifying to obtain a second component emulsion for later use; adding Arabic gum and guar gum to deionized water, heating while stirring evenly, to obtain a coating solution; adding the second component emulsion to the coating solution to obtain a mixture, ultrasonically dispersing evenly, and cooling and keeping the mixture at 4-6 °C, filtering the mixture to obtain a solid material, and vacuum drying the solid material to obtain the second active component;
wherein preparing the functional masterbatch comprises using the first active component to prepare a first functional masterbatch and using the second active component to prepare a second functional masterbatch; and
wherein the spinning comprises: mixing the first functional masterbatch, the second functional masterbatch and nylon raw material, and spinning to obtain the bio-nylon fiber comprising the plant active component.

2. The method according to claim 1, wherein in the first processing,
the nano-mesoporous silica and the perlite are in a weight ratio of (2-3):1;
the primary powder and the toluene are in a volume ratio of 1:(20-22);
the primary powder, the N-(β-aminoethyl)-γ-aminopropyltrimethoxysilane, and the γ-aminopropyltrimethoxysilane are in a weight ratio of (8-10):(1-2):(0.8-1); and
the nano-mesoporous silica has a particle size of 200-250 nm, a specific surface area of 550-600 m²/g, and a pore volume of 0.62-0.66 cm³/g, and
wherein in the second processing, the sodium mercaptoacetate may have a content of 8-10wt% in the second processing solution.

3. The method according to any of the previous claims, wherein in the loading,
the first component solution, the sodium dodecylbenzenesulfonate, the second processed material and the ethanol solution are in a weight ratio of (16-18):(0.05-0.06):(7-8):(50-60); and
the ethanol aqueous solution has an ethanol concentration of 50-60%.

4. The method according to any of the previous claims, wherein in preparing the second active component, the second component emulsion and the coating solution are in a volume ratio of 1:(1.8-2.2), wherein
in the second component emulsion, the second component solution, the sodium carboxymethyl cellulose, the maltodextrin and the deionized water are in a weight ratio of (16-18):(0.4-0.5):(1-1.5):(50-60); and
in the coating solution, the Arabic gum, the guar gum and the deionized water are in a weight ratio of (20-25):(0.8-1):(150-160).

5. The method according to any of the previous claims, wherein the preparing the functional masterbatch comprises:
uniformly mixing nylon 66 chips, the first active component, antioxidant 1790 and sodium stearate, controlling a temperature at 260-265°C, after being in a molten state, extruding and granulating to obtain the first functional masterbatch,
wherein the nylon 66 chips, the first active component, the antioxidant 1790, and the sodium stearate are in a weight ratio of (80-90):(10-11):(1-1.2):(0.7-0.8); and
uniformly mixing nylon 66 chips, the second active component, antioxidant 1790, and sodium stearate, controlling a temperature at 260-265°C, after being in a molten state, extruding and granulating to obtain the second functional masterbatch,
wherein the nylon 66 chips, the second active component, the antioxidant 1790 and the sodium stearate are in a weight ratio of (80-90):(20-22):(1-1.2):(0.7-0.8).

6. The method according to any of the previous claims, wherein the spinning comprises:
uniformly mixing nylon 66 chips, the first functional masterbatch, and the second functional masterbatch, controlling a temperature at a melting temperature of 260-265°C,
wherein the nylon 66 chips, the first functional masterbatch, and the second functional masterbatch are in a weight ratio of 100:(4-5):(7-8);
after melting, extruding and spinning at a spinning speed of 1600-1800 m/min to produce fibers; and
drawing, oiling, and wounding the fibers to obtain the bio-nylon fibers containing plant active components.

7. The method according to any of the previous claims, wherein extracting the first component further comprises:
Washing the Speranskia tuberculata with deionized water, drying and pulverizing to 1800-2000 mesh to obtain a micro-powder of the first active component;
adding the micro-powder of the first active component to 5-6 times the volume of an ethanol aqueous solution, stirring and heating to 40-50°C, maintaining at 40-50°C while stirring, performing an ultrasonic extraction for 20-30 minutes, heating to 55-65°C, maintaining at 55-65°C while stirring, performing the ultrasonic extraction for 10-20 minutes, and filtering to obtain a solid material and the first extraction solution of the first component;
adding the solid material to 3-4 times the volume of an ethanol aqueous solution, heating to 55-65°C while stirring, maintaining at 55-65°C while stirring, and performing the ultrasonic extraction for 10-20 minutes, and filtering to obtain the second extraction solution of the first component; and
combining the first extraction solution of the first component and the second extraction solution of the first component, and vacuum concentrating to 30-35% of the original volume to obtain the first component solution, wherein
the ethanol aqueous solution has an ethanol concentration of 65-75%; and
the ultrasonic extraction has an ultrasonic frequency of 40-45 kHz, and an ultrasonic power of 350-450 W.

8. The method according to any of the previous claims, wherein extracting the second component further comprises,
washing the Artemisia argyi, the Lygodium japonicum and the Carthamus tinctorius with deionized water, drying and pulverizing to 1800-2000 mesh to obtain a micro-powder of the second active component;
adding the micro-powder of the second active component to 5-6 times the volume of an ethanol aqueous solution, stirring and heated to 40-50°C, maintaining at 40-50°C while stirring, and performing an ultrasonic extraction for 20-30 minutes, heating to 55-65°C, maintaining at 55-65°C while stirring, and performing the ultrasonic extraction for 10-20 minutes, and filtering to obtain a solid material and the first extraction solution of the second component;
adding the solid material to 3-4 times the volume of an ethanol aqueous solution, stirring and heating to 55-65°C, maintaining at 55-65°C while stirring, performing an ultrasonic extraction for 10-20 minutes, and filtering to obtain the second extraction solution of the second component; and
combining the first extraction solution of the second component and the second extraction solution of the second component, and vacuum concentrating to 30-35% of the original volume to obtain the second component solution, wherein
the Artemisia argyi, the Lygodium japonicum and the Carthamus tinctorius are in a weight ratio of (10-12):(6-7):(0.6-0.8);
the ethanol aqueous solution has an ethanol concentration of 65-75%; and
the ultrasonic extraction has an ultrasonic frequency of 40-45 kHz, and an ultrasonic power of 350-450 W.

9. A bio-nylon fiber comprising nylon 66 and a plurality of plant active components, wherein the plurality of plant active components are extracted from Speranskia tuberculata, Artemisia argyi, Lygodium japonicum and Carthamus tinctorius wherein the bio-nylon fiber may have been manufactured by the method of any of the previous claims.

10. The bio-nylon fiber according to claim 9, wherein the bio-nylon fiber is obtained by spinning using a mixture of nylon 66, a first functional masterbatch, and a second functional masterbatch,
wherein the first functional masterbatch comprises nylon 66, a first active component, antioxidant 1790, and sodium stearate,
wherein the first active component comprises a plant active component extracted from the the Speranskia tuberculata; and
wherein the second functional masterbatch comprises nylon 66, a second active component, antioxidant 1790 and sodium stearate,
wherein the second active component comprises plant active components extracted from the Artemisia argyi, the Lygodium japonicum and the Carthamus tinctorius.

11. The bio-nylon fiber according to claim 10, wherein in the mixture, the nylon 66, the first functional masterbatch, and the second functional masterbatch are in a weight ratio of 100:(4-5):(7-8).

12. The bio-nylon fiber according to claim 10 or 11, wherein in the first functional masterbatch, the nylon 66, the first active component, the antioxidant 1790, and the sodium stearate are in a weight ratio of (80-90):(10-11):(1-1.2):(0.7-0.8).

13. The bio-nylon fiber according to any of claims 10 to 12, wherein the first active component is prepared using a primary powder, N-(β-aminoethyl)-γ-aminopropyltrimethoxysilane, and γ-aminopropyltrimethoxysilane,
wherein the primary powder comprises perlite and nano-mesoporous silica, which may have a particle size of 200-250 nm, a specific surface area of 550-600 m²/g, and a pore volume of 0.62-0.66 cm³/g, and
wherein in preparing the first active component, the primary powder, the N-(β-aminoethyl)-γ-aminopropyltrimethoxysilane, and the γ-aminopropyltrimethoxysilane may be used in a weight ratio of (8-10):(1-2):(0.8-1), and
wherein the nano-mesoporous silica and the perlite may be in a weight ratio of (2-3):1.

14. The bio-nylon fiber according to any of claims 10 to 13, wherein the second active component is prepared using a second component emulsion and a coating solution in a volume ratio of 1:(1.8-2.2), wherein
the second component emulsion comprises a second component solution, sodium carboxymethyl cellulose, maltodextrin and deionized water in a weight ratio of (16-18):(0.4-0.5):(1-1.5):(50-60),
wherein the second component solution comprises a plant active component extracted from the Artemisia argyi, the Lygodium japonicum and the Carthamus tinctorius; and
the coating solution comprises Arabic gum, guar gum and deionized water in a weight ratio of (20-25):(0.8-1):(150-160).

15. The bio-nylon fiber according to any of claims 10 to 14, wherein for preparing the second active component, the Artemisia argyi, the Lygodium japonicum and the Carthamus tinctorius are used in a weight ratio of (10-12):(6-7):(0.6-0.8);
and/or wherein in the second functional masterbatch, the nylon 66, the second active component, the antioxidant 1790 and the sodium stearate are in a weight ratio of (80-90):(20-22):(1-1.2):(0.7-0.8).

## Patentansprüche

1. Ein Verfahren zum Herstellen einer Bio-Nylonfaser, die pflanzliche Wirkstoffkomponenten enthält, wobei das Verfahren Extrahieren einer ersten Komponente, Extrahieren einer zweiten Komponente, Herstellen einer ersten Wirkstoffkomponente, Herstellen einer zweiten Wirkstoffkomponente, Herstellen eines funktionalen Masterbatches und Spinnen aufweist,
wobei das Extrahieren der ersten Komponente aufweist: Trocknen eines ganzen Krauts von Speranskia tuberculata, Pulverisieren, zweimaliges Durchführen einer Ultraschallextraktion unter Verwendung einer wässrigen Ethanollösung, um eine erste Extraktionslösung der ersten bzw. eine zweite Extraktionslösung der ersten Komponente zu erhalten, Zusammenführen der ersten Extraktionslösung der ersten Komponente und der zweiten Extraktionslösung der ersten Komponente, und Konzentrieren, um eine erste Komponentenlösung zu erhalten;
wobei das Extrahieren der zweiten Komponente aufweist: Trocknen von Artemisia argyi, Lygodium japonicum und Carthamus tinctorius, Mischen und Pulverisieren, zweimaliges Durchführen einer Ultraschallextraktion unter Verwendung einer wässrigen Ethanollösung, um eine erste Extraktionslösung der zweiten Komponente bzw. eine zweite Extraktionslösung der zweiten Komponente zu erhalten, Zusammenführen der ersten Extraktionslösung der zweiten Komponente und der zweiten Extraktionslösung der zweiten Komponente, und Konzentrieren, um eine zweite Komponentenlösung zu erhalten;
wobei das Herstellen der ersten Wirkstoffkomponente erstes Verarbeiten, zweites Verarbeiten und Laden aufweist,
wobei das erste Verarbeiten aufweist: Mischen von nano-mesoporösem Siliciumdioxid und Perlit, um ein primäres Pulver zu erhalten, Einbringen des primären Pulvers in Toluol und gleichmäßiges Dispergieren mittels Ultraschall; Hinzufügen von N-(β-Aminoethyl)-γ-aminopropyltrimethoxysilan und γ-Aminopropyltrimethoxysilan, um unter Rühren eine Mischung zu bilden; Erhöhen der Temperatur während dem Rühren und Trennen der Mischung, um ein festes Material zu erhalten; und Waschen des festen Materials mit wasserfreiem Ethanol, und Trocknen des festen Materials, um ein erstes verarbeitetes Material zu erhalten;
wobei das zweite Verarbeiten aufweist: Einbringen des ersten verarbeiteten Materials in das 13- bis 15-fache Volumen einer zweiten Verarbeitungslösung, um eine Mischung zu erhalten, Rühren der Mischung, und Trennen der Mischung, um ein festes Material zu erhalten; und Waschen des festen Materials mit deionisiertem Wasser, Trocknen des festen Materials, um ein zweites verarbeitetes Material zu erhalten, wobei die zweite Verarbeitungslösung eine deionisierte wässrige Lösung von Natriummercaptoacetat ist; und
wobei das Laden aufweist: Hinzufügen der ersten Komponentenlösung und von Natriumdodecylbenzolsulfonat zu einer Ethanollösung, und gleichmäßiges Rühren; Hinzufügen des zweiten verarbeiteten Materials und gleichmäßiges Verteilen, um eine Mischung zu erhalten; Vakuumieren, bis ein Vakuumgrad von 0,09 - 0,095 MPa erreicht ist, Aufrechterhalten des Vakuumgrads; Wiederherstellen eines Normaldrucks, und Erhöhen der Temperatur; und Rühren der Mischung, Filtern der Mischung, um ein festes Material zu erhalten, und Vakuumtrocknen des festen Materials, um die erste Wirkstoffkomponente zu erhalten;
wobei das Herstellen der zweiten Wirkstoffkomponente aufweist: Hinzufügen der zweiten Komponentenlösung, Natriumcarboxymethylcellulose und Maltodextrin zu deionisiertem Wasser, und Emulgieren mit Ultraschall, um eine zweite Komponentenemulsion zur späteren Verwendung zu erhalten; Hinzufügen von Gummi arabicum und Guarkernmehl zu deionisiertem Wasser, Erhitzen unter gleichmäßigem Rühren, um eine Beschichtungslösung zu erhalten; Hinzufügen der zweiten Komponentenemulsion zur Beschichtungslösung, um eine Mischung zu erhalten, gleichmäßiges Dispergieren mit Ultraschall, und Abkühlen und Halten der Mischung bei 4 - 6 °C, Filtern der Mischung, um ein festes Material zu erhalten, und Vakuumtrocknen des festen Materials, um die zweite Wirkstoffkomponente zu erhalten;
wobei das Herstellen des funktionalen Masterbatches das Verwenden der ersten Wirkstoffkomponente zum Herstellen eines ersten funktionalen Masterbatches und das Verwenden der zweiten Wirkstoffkomponente zum Herstellen eines zweiten funktionalen Masterbatches aufweist; und
wobei das Spinnen aufweist: Mischen des ersten funktionalen Masterbatches, des zweiten funktionalen Masterbatches und des Nylon-Rohmaterials und Spinnen, um die Bio-Nylonfaser zu erhalten, die die pflanzliche Wirkstoffkomponente aufweist.

2. Das Verfahren nach Anspruch 1, wobei in der ersten Verarbeitung das nano-mesoporöse Siliciumdioxid und das Perlit in einem Gewichtsverhältnis von (2-3):1 vorliegen,
das primäre Pulver und Toluol in einem Volumenverhältnis von 1:(20-22) stehen;
das primäre Pulver, das N-((β-Aminoethyl)-γ-Aminopropyltrimethoxysilan und das γ-Aminopropyltrimethoxysilan in einem Gewichtsverhältnis von (8-10):(1-2):(0,8-1) vorliegen; und
das nano-mesoporöse Siliciumdioxid eine Partikelgröße von 200 - 250 nm, einen spezifische Oberflächenbereich von 550 - 600 m²/g und ein Porenvolumen von 0,62 - 0,66 cm³/g hat, und
wobei in der zweiten Verarbeitung das Natriummercaptoacetat einen Gehalt von 8 - 10 Gew.-% in der zweiten Verarbeitungslösung aufweisen kann.

3. Das Verfahren gemäß einem der vorhergehenden Ansprüche, wobei beim Laden,
die erste Komponentenlösung, das Natriumdodecylbenzolsulfonat, das zweite verarbeitete Material und die Ethanollösung in einem Gewichtsverhältnis von (16-18):(0,05-0,06):(7-8):(50-60) vorliegen; und
die wässrige Ethanollösung eine Ethanolkonzentration von 50 - 60 % hat.

4. Das Verfahren gemäß einem der vorhergehenden Ansprüche, wobei beim Herstellen der zweiten Wirkstoffkomponente die zweite Komponentenemulsion und die Beschichtungslösung in einem Volumenverhältnis von 1:(1,8-2,2) vorliegen, wobei
in der zweiten Komponentenemulsion die zweite Komponentenlösung, die Natriumcarboxymethylcellulose, das Maltodextrin und das deionisierte Wassers ein Gewichtsverhältnis von (16-18):(0,4-0,5):(1-1,5):(50-60) vorliegen; und
in der Beschichtungslösung das Gummi arabicum, das Guarkernmehl und das deionisierte Wasser in einem Gewichtsverhältnis von (20-25):(0,8-1):(150-160) vorliegen.

5. Das Verfahren gemäß einem der vorhergehenden Ansprüche, wobei das Herstellen des funktionalen Masterbatches aufweist:
gleichmäßiges Mischen von Nylon 66-Chips, der ersten aktiven Komponente, des Antioxidans 1790 und Natriumstearat, Kontrollieren einer Temperatur bei 260 - 265 °C, nachdem sie sich im geschmolzenen Zustand befinden, Extrudieren und Granulieren, um das erste funktionale Masterbatch zu erhalten,
wobei die Nylon 66-Chips, die erste aktive Komponente, das Antioxidans 1790 und das Natriumstearat in einem Gewichtsverhältnis von (80-90):(10-11):(1-1,2):(0,7-0,8) vorliegen; und
gleichmäßiges Mischen von Nylon 66-Chips, der zweiten aktiven Komponente, des Antioxidans 1790 und Natriumstearat, Kontrollieren einer Temperatur bei 260 -265 °C, nachdem es sich in einem geschmolzenen Zustand befinden, Extrudieren und Granulieren, um das zweite funktionale Masterbatch zu erhalten,
wobei die Nylon 66-Chips, die zweite aktive Komponente, das Antioxidans 1790 und das Natriumstearat in einem Gewichtsverhältnis von (80-90):(20-22):(1-1,2):(0,7-0,8) vorliegen.

6. Das Verfahren gemäß einem der vorhergehenden Ansprüche, wobei das Spinnen aufweist:
gleichmäßiges Mischen von Nylon 66-Chips, dem ersten funktionalen Masterbatch und dem zweiten funktionalen Masterbatch, Kontrollieren einer Temperatur bei einer Schmelztemperatur von 260 - 265 °C,
wobei die Nylon 66-Chips, das erste funktionale Masterbatch und das zweite funktionale Masterbatch in einem Gewichtsverhältnis von 100:(4-5):(7-8) vorliegen;
nach dem Schmelzen, Extrudieren und Spinnen bei einer Spinngeschwindigkeit von 1600 - 1800 m/min, um Fasern herzustellen; und
Ziehen, Ölen und Winden der Fasern, um die Bio-Nylonfasern zu erhalten, welche pflanzliche Wirkstoffkomponenten enthalten.

7. Das Verfahren gemäß einem der vorhergehenden Ansprüche, wobei das Extrahieren der ersten Komponente weiterhin aufweist:
Waschen von Speranskia tuberculata mit deionisiertem Wasser, Trocknen und Pulverisieren auf 1800 - 2000 Mesh, um ein Mikropulver der ersten Wirkstoffkomponente zu erhalten;
Hinzufügen des Mikropulvers der ersten aktiven Komponente zum 5-bis 6-fachen Volumen einer wässrigen Ethanollösung, Rühren und Erhitzen auf 40 - 50 °C, Halten bei 40 - 50 °C unter Rühren, Durchführen einer Ultraschallextraktion für 20 - 30 Minuten, Erhitzen auf 55 - 65 °C, Halten bei 55-65 °C unter Rühren, Durchführen der Ultraschallextraktion für 10 - 20 Minuten und Filtern, um ein festes Material und die erste Extraktionslösung der ersten Komponente zu erhalten;
Hinzufügen des festen Materials zum 3- bis 4-fachen Volumen einer wässrigen Ethanollösung, Erhitzen auf 55 - 65 °C unter Rühren, Halten bei 55 - 65 °C unter Rühren, und Durchführen der Ultraschallextraktion für 10 - 20 Minuten und Filtern, um die zweite Extraktionslösung der ersten Komponente zu erhalten; und
Kombinieren der ersten Extraktionslösung der ersten Komponente und der zweiten Extraktionslösung der ersten Komponente, und Vakuumkonzentrieren auf 30 - 35 % des ursprünglichen Volumens, um die erste Komponentenlösung zu erhalten, wobei
die wässrige Ethanollösung eine Ethanolkonzentration von 65 - 75 % aufweist; und
die Ultraschallextraktion eine Ultraschallfrequenz von 40 - 45 kHz, und eine Ultraschallleistung von 350 - 450 W hat.

8. Das Verfahren gemäß einem der vorhergehenden Ansprüche, wobei das Extrahieren der zweiten Komponente weiterhin aufweist,
Waschen von Artemisia argyi, Lygodium japonicum und Carthamus tinctorius mit deionisiertem Wasser, Trocknen und Pulverisieren auf 1800 - 2000 Mesh, um ein Mikropulver der zweiten Wirkstoffkomponente zu erhalten;
Hinzufügen des Mikropulvers der zweiten Wirkstoffkomponente zum 5- bis 6-fachen Volumen einer wässrigen Ethanollösung, Rühren und Erhitzen auf 40 - 50 °C, Halten bei 40 - 50 °C unter Rühren, und Durchführen einer Ultraschallextraktion für 20 - 30 Minuten, Erhitzen auf 55 - 65 °C, Halten bei 55 - 65 °C unter Rühren, und Durchführen der Ultraschallextraktion für 10 - 20 Minuten, und Filtern, um ein festes Material und die erste Extraktionslösung der zweiten Komponente zu erhalten;
Hinzufügen des festen Materials zum 3- bis 4-fachen Volumen einer wässrigen Ethanollösung, Rühren und Erhitzen auf 55 - 65 °C, Halten bei 55 - 65 °C unter Rühren, Durchführen einer Ultraschallextraktion für 10 - 20 Minuten, und Filtern, um die zweite Extraktionslösung der zweiten Komponente zu erhalten; und
Kombinieren der ersten Extraktionslösung der zweiten Komponente und der zweiten Extraktionslösung der zweiten Komponente, und Vakuumkonzentrieren auf 30 - 35 % des ursprünglichen Volumens, um die zweite Komponentenlösung zu erhalten, wobei
Artemisia argyi, Lygodium japonicum und Carthamus tinctorius in einem Gewichtsverhältnis von (10-12):(6-7):(0,6-0,8) vorliegen;
die wässrige Ethanollösung eine Ethanolkonzentration von 65 - 75 % aufweist; und
die Ultraschallextraktion eine Ultraschallfrequenz von 40 - 45 kHz und eine Ultraschallleistung von 350 - 450 W hat.

9. Eine Bio-Nylonfaser, die Nylon 66 und eine Vielzahl von pflanzlichen Wirkstoffkomponenten aufweist, wobei die Vielzahl der pflanzlichen Wirkstoffkomponenten aus Speranskia tuberculata, Artemisia argyi, Lygodium japonicum und Carthamus tinctorius extrahiert werden, wobei die Bio-Nylonfaser nach dem Verfahren gemäß einem der vorhergehenden Ansprüche hergestellt worden sein kann.

10. Die Bio-Nylonfaser nach Anspruch 9, wobei die Bio-Nylonfaser durch Spinnen unter Verwendung einer Mischung aus Nylon 66, einem ersten funktionalen Masterbatch und einem zweiten funktionalen Masterbatch erhalten wird,
wobei das erste funktionale Masterbatch Nylon 66, eine erste Wirkstoffkomponente, Antioxidans 1790 und Natriumstearat aufweist,
wobei die erste Wirkstoffkomponente eine pflanzliche Wirkstoffkomponente aufweist, die aus der Speranskia tuberculata extrahiert wurde; und
wobei das zweite funktionale Masterbatch Nylon 66, eine zweite Wirkstoffkomponente, Antioxidans 1790 und Natriumstearat aufweist,
wobei die zweite Wirkstoffkomponente pflanzliche Wirkstoffkomponenten aufweist, die aus Artemisia argyi, Lygodium japonicum und Carthamus tinctorius extrahiert wurden.

11. Die Bio-Nylonfaser nach Anspruch 10, wobei in der Mischung das Nylon 66, das erste funktionale Masterbatch und das zweite funktionale Masterbatch in einem Gewichtsverhältnis von 100:(4-5):(7-8) vorliegen.

12. Die Bio-Nylonfaser nach Anspruch 10 oder 11, wobei im ersten funktionalen Masterbatch das Nylon 66, die erste Wirkstoffkomponente, das Antioxidans 1790 und das Natriumstearat in einem Gewichtsverhältnis von (80-90):(10-11):(1-1,2):(0,7-0,8) vorliegen.

13. Die Bio-Nylonfaser nach einem der Ansprüche 10 bis 12, wobei die erste Wirkstoffkomponente unter Verwendung eines primären Pulvers, N-(β-Aminoethyl)-γ-Aminopropyltrimethoxysilan und γ-Aminopropyltrimethoxysilan hergestellt wird,
wobei das primäre Pulver Perlit und nanomesoporöses Siliciumdioxid aufweist, das eine Partikelgröße von 200 -250 nm, einen spezifischen Oberflächenbereich von 550 - 600 m²/g und ein Porenvolumen von 0,62 - 0,66 cm³/g aufweisen kann, und
wobei beim Herstellen der ersten Wirkstoffkomponente das primäre Pulver, das N-(β-Aminoethyl)-γ-aminopropyltrimethoxysilan und das γ-Aminopropyltrimethoxysilan in einem Gewichtsverhältnis von (8-10):(1-2):(0,8-1) verwendet werden können, und
wobei das nanomesoporöse Siliciumdioxid und das Perlit in einem Gewichtsverhältnis von (2-3):1 vorliegen können.

14. Die Bio-Nylonfaser nach einem der Ansprüche 10 bis 13, wobei die zweite Wirkstoffkomponente unter Verwendung einer zweiten Komponentenemulsion und einer Beschichtungslösung in einem Volumenverhältnis von 1:(1,8-2,2) hergestellt wird, wobei
die zweite Komponentenemulsion eine zweite Komponentenlösung, Natriumcarboxymethylcellulose, Maltodextrin und deionisiertes Wasser in einem Gewichtsverhältnis von (16-18):(0,4-0,5):(1-1,5):(50-60) aufweist,
wobei die zweite Komponentenlösung eine pflanzliche Wirkstoffkomponente aufweist, die aus Artemisia argyi, Lygodium japonicum und Carthamus tinctorius extrahiert wurde; und
die Beschichtungslösung Gummi arabicum, Guarkernmehl und deionisiertes Wasser in einem Gewichtsverhältnis von (20-25):(0,8-1):(150-160) aufweist.

15. Die Bio-Nylonfaser nach einem der Ansprüche 10 bis 14, wobei zum Herstellen der zweiten Wirkstoffkomponente Artemisia argyi, Lygodium japonicum und Carthamus tinctorius in einem Gewichtsverhältnis von (10-12):(6-7):(0,6-0,8) verwendet werden;
und/oder wobei im zweiten funktionalen Masterbatch das Nylon 66, die zweite Wirkstoffkomponente, das Antioxidans 1790 und das Natriumstearat in einem Gewichtsverhältnis von (80-90):(20-22):(1-1,2):(0,7-0,8) vorliegen.

## Revendications

1. Procédé de préparation d'une fibre de bio-nylon comprenant des composants actifs végétaux, dans lequel le procédé comprend l'extraction d'un premier composant, l'extraction d'un deuxième composant, la préparation d'un premier composant actif, la préparation d'un deuxième composant actif, la préparation d'un mélange maître fonctionnel et le filage,
dans lequel l'extraction du premier composant comprend : le séchage d'une herbe entière de *Speranskia tuberculata,* la pulvérisation, la réalisation d'une extraction ultrasonique à deux reprises à l'aide d'une solution aqueuse d'éthanol pour obtenir respectivement une première solution d'extraction du premier composant et une deuxième solution d'extraction du premier composant, la combinaison de la première solution d'extraction du premier composant et de la deuxième solution d'extraction du premier composant, et la concentration pour obtenir une solution de premier composant ;
dans lequel l'extraction du deuxième composant comprend : le séchage d'*Artemisia argyi,* de *Lygodium japonicum* et de *Carthamus tinctorius,* le mélange et la pulvérisation, la réalisation d'une extraction ultrasonique à deux reprises à l'aide d'une solution aqueuse d'éthanol pour obtenir respectivement une première solution d'extraction du deuxième composant et une deuxième solution d'extraction du deuxième composant, la combinaison de la première solution d'extraction du deuxième composant et de la deuxième solution d'extraction du deuxième composant, et la concentration pour obtenir une solution de deuxième composant ;
dans lequel la préparation du premier composant actif comprend un premier traitement, un deuxième traitement et un chargement,
dans lequel le premier traitement comprend : le mélange de nanosilice mésoporeuse et de perlite pour obtenir une poudre primaire, le placement de la poudre primaire dans du toluène et la dispersion uniforme de manière ultrasonique ; l'ajout de N-(β-aminoéthyl)-γ-aminopropyltriméthoxysilane et d'γ-aminopropyltriméthoxysilane pour former un mélange tout en agitant ; l'augmentation de la température tout en agitant, et la séparation du mélange pour obtenir un matériau solide ; et le lavage du matériau solide avec de l'éthanol anhydre, et le séchage du matériau solide pour obtenir un premier matériau traité ;
dans lequel le deuxième traitement comprend : le placement du premier matériau traité dans 13 à 15 fois le volume d'une deuxième solution de traitement pour obtenir un mélange, l'agitation du mélange et la séparation du mélange pour obtenir un matériau solide ; et le lavage du matériau solide avec de l'eau déionisée, le séchage du matériau solide pour obtenir un deuxième matériau traité, dans lequel la deuxième solution de traitement est une solution aqueuse déionisée de mercaptoacétate de sodium ; et
dans lequel le chargement comprend : l'ajout de la solution de premier composant et de dodécylbenzènesulfonate de sodium dans une solution d'éthanol, et l'agitation uniforme ; l'ajout du deuxième matériau traité, et la dispersion uniforme pour obtenir un mélange ; la mise sous vide jusqu'à ce qu'un degré de vide atteigne 0,09 à 0,095 MPa, le maintien à ce degré de vide ; le rétablissement à une pression normale et l'augmentation de la température ; et l'agitation du mélange, la filtration du mélange pour obtenir un matériau solide, et le séchage sous vide du matériau solide pour obtenir le premier composant actif ;
dans lequel la préparation du deuxième composant actif comprend : l'ajout de la solution de deuxième composant, de carboxyméthylcellulose de sodium et de maltodextrine à de l'eau déionisée, et l'émulsification de manière ultrasonique pour obtenir une émulsion de deuxième composant pour une utilisation ultérieure ; l'ajout de gomme arabique et de gomme de guar à de l'eau déionisée, le chauffage tout en agitant uniformément, pour obtenir une solution de revêtement ; l'ajout de l'émulsion de deuxième composant à la solution de revêtement pour obtenir un mélange, la dispersion uniforme de manière ultrasonique, le refroidissement et le fait de garder le mélange à 4 à 6 °C, la filtration du mélange pour obtenir un matériau solide, et le séchage sous vide du matériau solide pour obtenir le deuxième composant actif ;
dans lequel la préparation du mélange maître fonctionnel comprend l'utilisation du premier composant actif pour préparer un premier mélange maître fonctionnel et l'utilisation du deuxième composant actif pour préparer un deuxième mélange maître fonctionnel ; et
dans lequel le filage comprend : le mélange du premier mélange maître fonctionnel, du deuxième mélange maître fonctionnel et de la matière première en nylon, et le filage pour obtenir la fibre de bio-nylon comprenant le composant actif végétal.

2. Procédé selon la revendication 1, dans lequel, dans le premier traitement,
la nanosilice mésoporeuse et la perlite sont dans un rapport pondéral de (2 à 3):1 ;
la poudre primaire et le toluène sont dans un rapport volumique de 1: (20 à 22) ;
la poudre primaire, le N-(β-aminoéthyl)-γ-aminopropyltriméthoxysilane et l'γ-aminopropyltriméthoxysilane sont dans un rapport pondéral de (8 à 10):(1 à 2):(0,8 à 1) ; et
la nanosilice mésoporeuse a une taille de particules de 200 à 250 nm, une aire spécifique de 550 à 600 m²/g et un volume poreux de 0,62 à 0,66 cm³/g, et
dans lequel, dans le deuxième traitement, le mercaptoacétate de sodium peut avoir une teneur de 8 à 10 % en poids dans la deuxième solution de traitement.

3. Procédé selon l'une quelconque des revendications précédentes, dans lequel, lors du chargement,
la solution de premier composant, le dodécylbenzènesulfonate de sodium, le deuxième matériau traité et la solution d'éthanol sont dans un rapport pondéral de (16 à 18):(0,05 à 0,06) : (7 à 8) : (50 à 60) ; et
la solution aqueuse d'éthanol a une concentration en éthanol de 50 à 60 %.

4. Procédé selon l'une quelconque des revendications précédentes, dans lequel, lors de la préparation du deuxième composant actif, l'émulsion de deuxième composant et la solution de revêtement sont dans un rapport volumique de 1:(1,8 à 2,2), dans lequel
dans l'émulsion de deuxième composant, la solution de deuxième composant, la carboxyméthylcellulose de sodium, la maltodextrine et l'eau déionisée sont dans un rapport pondéral de (16 à 18):(0,4 à 0,5) : (1 à 1,5):(50 à 60) ; et
dans la solution de revêtement, la gomme arabique, la gomme de guar et l'eau déionisée sont dans un rapport pondéral de (20 à 25): (0,8 à 1):(150 à 160).

5. Procédé selon l'une quelconque des revendications précédentes, dans lequel la préparation du mélange maître fonctionnel comprend :
le mélange uniforme de copeaux de nylon 66, du premier composant actif, d'un antioxydant 1790 et de stéarate de sodium, le contrôle d'une température à 260 à 265 °C, après avoir été dans un état fondu, l'extrusion et la granulation pour obtenir le premier mélange maître fonctionnel,
dans lequel les copeaux de nylon 66, le premier composant actif, l'antioxydant 1790 et le stéarate de sodium sont dans un rapport pondéral de (80 à 90):(10 à 11):(1 à 1,2):(0,7 à 0,8) ; et
le mélange uniforme de copeaux de nylon 66, du deuxième composant actif, de l'antioxydant 1790 et du stéarate de sodium, le contrôle d'une température à 260 à 265 °C, après avoir été dans un état fondu, l'extrusion et la granulation pour obtenir le deuxième mélange maître fonctionnel,
dans lequel les copeaux de nylon 66, le deuxième composant actif, l'antioxydant 1790 et le stéarate de sodium sont dans un rapport pondéral de (80 à 90):(20 à 22):(1 à 1,2): (0,7 à 0,8).

6. Procédé selon l'une quelconque des revendications précédentes, dans lequel le filage comprend :
le mélange uniforme de copeaux de nylon 66, du premier mélange maître fonctionnel et du deuxième mélange maître fonctionnel, le contrôle d'une température à une température de fusion de 260 à 265 °C,
dans lequel les copeaux de nylon 66, le premier mélange maître fonctionnel et le deuxième mélange maître fonctionnel sont dans un rapport pondéral de 100: (4 à 5): (7 à 8) ;
après la fusion, l'extrusion et le filage à une vitesse de filage de 1600 à 1800 m/min pour produire des fibres ; et
l'étirage, le graissage et l'enroulement des fibres pour obtenir les fibres de bio-nylon contenant des composants actifs végétaux.

7. Procédé selon l'une quelconque des revendications précédentes, dans lequel l'extraction du premier composant comprend en outre :
le lavage de *Speranskia tuberculata* avec de l'eau déionisée, le séchage et la pulvérisation à 1800 à 2000 mesh pour obtenir une micropoudre du premier composant actif ;
l'ajout de la micropoudre du premier composant actif à 5 à 6 fois le volume d'une solution aqueuse d'éthanol, l'agitation et le chauffage à 40 à 50 °C, le maintien à 40 à 50 °C tout en agitant, la réalisation d'une extraction ultrasonique pendant 20 à 30 minutes, le chauffage à 55 à 65 °C, le maintien à 55 à 65 °C tout en agitant, la réalisation de l'extraction ultrasonique pendant 10 à 20 minutes, et la filtration pour obtenir un matériau solide et la première solution d'extraction du premier composant ;
l'ajout du matériau solide à 3 à 4 fois le volume d'une solution aqueuse d'éthanol, le chauffage à 55 à 65 °C tout en agitant, le maintien à 55 à 65 °C tout en agitant, et la réalisation de l'extraction ultrasonique pendant 10 à 20 minutes, et la filtration pour obtenir la deuxième solution d'extraction du premier composant ; et
la combinaison de la première solution d'extraction du premier composant et de la deuxième solution d'extraction du premier composant, et la concentration sous vide à 30 à 35 % du volume d'origine pour obtenir la solution de premier composant, dans lequel
la solution aqueuse d'éthanol a une concentration en éthanol de 65 à 75 % ; et
l'extraction ultrasonique a une fréquence ultrasonique de 40 à 45 kHz et une puissance ultrasonique de 350 à 450 W.

8. Procédé selon l'une quelconque des revendications précédentes, dans lequel l'extraction du deuxième composant comprend en outre :
le lavage de *l'Artemisia argyi,* du *Lygodium japonicum* et du *Carthamus tinctorius* avec de l'eau déionisée, le séchage et la pulvérisation à 1800 à 2000 mesh pour obtenir une micropoudre du deuxième composant actif ;
l'ajout de la micropoudre du deuxième composant actif à 5 à 6 fois le volume d'une solution aqueuse d'éthanol, l'agitation et le chauffage à 40 à 50 °C, le maintien à 40 à 50 °C tout en agitant, et la réalisation d'une extraction ultrasonique pendant 20 à 30 minutes, le chauffage à 55 à 65 °C, le maintien à 55 à 65 °C tout en remuant, et la réalisation de l'extraction ultrasonique pendant 10 à 20 minutes, et la filtration pour obtenir un matériau solide et la première solution d'extraction du deuxième composant ;
l'ajout du matériau solide à 3 à 4 fois le volume d'une solution aqueuse d'éthanol, l'agitation et le chauffage à 55 à 65 °C, le maintien à 55-65 °C tout en agitant, la réalisation d'une extraction ultrasonique pendant 10 à 20 minutes, et la filtration pour obtenir la deuxième solution d'extraction du deuxième composant ; et
la combinaison de la première solution d'extraction du deuxième composant et de la deuxième solution d'extraction du deuxième composant, et la concentration sous vide à 30 à 35 % du volume d'origine pour obtenir la solution de deuxième composant, dans lequel
*l'Artemisia argyi,* le *Lygodium japonicum* et le *Carthamus tinctorius* sont dans un rapport pondéral de (10 à 12): (6 à 7): (0,6 à 0,8) ;
la solution aqueuse d'éthanol a une concentration en éthanol de 65 à 75 % ; et
l'extraction ultrasonique a une fréquence ultrasonique de 40 à 45 kHz et une puissance ultrasonique de 350 à 450 W.

9. Fibre de bio-nylon comprenant du nylon 66 et une pluralité de composants actifs végétaux, dans laquelle la pluralité de composants actifs végétaux sont extraits de *Speranskia tuberculata, Artemisia argyi, Lygodium japonicum* et *Carthamus tinctorius,* dans laquelle la fibre de bio-nylon peut avoir été fabriquée par le procédé de l'une quelconque des revendications précédentes.

10. Fibre de bio-nylon selon la revendication 9, dans laquelle la fibre de bio-nylon est obtenue par filage à l'aide d'un mélange de nylon 66, d'un premier mélange maître fonctionnel et d'un deuxième mélange maître fonctionnel,
dans laquelle le premier mélange maître fonctionnel comprend du nylon 66, un premier composant actif, un antioxydant 1790 et du stéarate de sodium,
dans laquelle le premier composant actif comprend un composant actif végétal extrait de *Speranskia tuberculata ;* et
dans laquelle le deuxième mélange maître fonctionnel comprend du nylon 66, un deuxième composant actif, un antioxydant 1790 et du stéarate de sodium,
dans laquelle le deuxième composant actif comprend des composants actifs végétaux extraits *d'Artemisia argyi,* de *Lygodium japonicum* et de *Carthamus tinctorius.*

11. Fibre de bio-nylon selon la revendication 10, dans laquelle, dans le mélange, le nylon 66, le premier mélange maître fonctionnel et le deuxième mélange maître fonctionnel sont dans un rapport pondéral de 100: (4 à 5): (7 à 8).

12. Fibre de bio-nylon selon la revendication 10 ou 11, dans laquelle, dans le premier mélange maître fonctionnel, le nylon 66, le premier composant actif, l'antioxydant 1790 et le stéarate de sodium sont dans un rapport pondéral de (80 à 90):(10 à 11):(1 à 1,2):(0,7 à 0,8).

13. Fibre de bio-nylon selon l'une quelconque des revendications 10 à 12, dans laquelle le premier composant actif est préparé à l'aide d'une poudre primaire, de N-(β-aminoéthyl)-γ-aminopropyltriméthoxysilane et d'γ-aminopropyltriméthoxysilane,
dans laquelle la poudre primaire comprend de la perlite et de la nanosilice mésoporeuse, qui peuvent avoir une taille de particules de 200 à 250 nm, une aire spécifique de 550 à 600 m²/g, et un volume poreux de 0,62 à 0,66 cm³/g, et
dans laquelle, lors de la préparation du premier composant actif, la poudre primaire, le N-(β-aminoéthyl)-γ-aminopropyltriméthoxysilane et l'γ-aminopropyltriméthoxysilane peuvent être utilisés dans un rapport pondéral de (8 à 10):(1 à 2):(0,8 à 1), et
dans laquelle la nanosilice mésoporeuse et la perlite peuvent être dans un rapport pondéral de (2 à 3):1.

14. Fibre de bio-nylon selon l'une quelconque des revendications 10 à 13, dans laquelle le deuxième composant actif est préparé en utilisant une émulsion de deuxième composant et une solution de revêtement dans un rapport volumique de 1:(1,8 à 2,2), dans laquelle
l'émulsion de deuxième composant comprend une solution de deuxième composant, de la carboxyméthylcellulose sodique, de la maltodextrine et de l'eau déionisée dans un rapport pondéral de (16 à 18):(0,4 à 0,5):(1 à 1,5):(50 à 60),
dans laquelle la solution de deuxième composant comprend un composant actif végétal extrait *d'Artemisia argyi,* de *Lygodium japonicum* et de *Carthamus tinctorius ;* et
la solution de revêtement comprend de la gomme arabique, de la gomme de guar et de l'eau déionisée dans un rapport pondéral de (20 à 25):(0,8 à 1):(150 à 160).

15. Fibre de bio-nylon selon l'une quelconque des revendications 10 à 14, dans laquelle, pour préparer le deuxième composant actif, *l'Artemisia argyi,* le *Lygodium japonicum* et le *Carthamus tinctorius* sont utilisés dans un rapport pondéral de (10 à 12):(6 à 7):(0,6 à 0,8) ;
et/ou dans laquelle, dans le deuxième mélange maître fonctionnel, le nylon 66, le deuxième composant actif, l'antioxydant 1790 et le stéarate de sodium sont dans un rapport pondéral de (80 à 90):(20 à 22):(1 à 1,2):(0,7 à 0,8).
